(19) Europäisches Patentamt / European Patent Office / Office européen des brevets

(11) **EP 1 903 769 A1**

(12) **EUROPEAN PATENT APPLICATION**

(43) Date of publication:
   **26.03.2008 Bulletin 2008/13**

(51) Int Cl.:
   **H04N 1/21** (2006.01)

(21) Application number: **07116693.8**

(22) Date of filing: **18.09.2007**

(84) Designated Contracting States:
   **AT BE BG CH CY CZ DE DK EE ES FI FR GB GR HU IE IS IT LI LT LU LV MC MT NL PL PT RO SE SI SK TR**
   Designated Extension States:
   **AL BA HR MK YU**

(30) Priority: **19.09.2006 KR 20060090890**

(71) Applicant: **Samsung Electronics Co., Ltd.**
   **Suwon-si**
   **Gyeonggi-do 443-742 (KR)**

(72) Inventors:
   • **Cho, Sung-jungc/oSamsung Adv. Inst. of Technology**
     **Gyeonggi-do 446-712 (KR)**

   • **Sung, Young-hunc/oSamsung Adv. Inst. of Technology**
     **Gyeonggi-do 446-712 (KR)**
   • **Choi, Chang-kyuc/oSamsung Adv. Inst. of Technology**
     **Gyeonggi-do 446-712 (KR)**
   • **Lee, Kwang-hyeonc/oSamsung Adv. Inst.of Technology**
     **Gyeonggi-do 446-712 (KR)**
   • **Kim, Yeun-baec/oSamsung Adv. Inst. of Technology**
     **Gyeonggi-do 446-712 (KR)**

(74) Representative: **Grootscholten, Johannes A.M. et al**
   **Arnold & Siedsma**
   **Sweelinckplein 1**
   **2517 GK Den Haag (NL)**

(54) **Apparatus and method for tagging ID in photos by utilizing geographical positions**

(57) An apparatus and method to tag ID in photos by utilizing geographical positions is provided. The apparatus to tag a photo with an ID based on a relative physical position includes a pose calculation module to calculate the pose of a camera in space photographing subjects, a photographing angle calculation module to calculate an angle at which each of the subjects is photographed, by using the calculated pose information and camera information, a coordinates calculation module to obtain the calculated photographing angle and the predetermined ID information of the subjects and to calculate the relative distance and coordinates between the subjects, a valid subject selection module to identify the subjects located within the photographing angle by using the calculated relative distance and coordinates, and an image tagging module to tag the photographed image ID information of the identified subjects.

EP 1 903 769 A1

**Description**

CROSS-REFERENCE TO RELATED APPLICATIONS

This application claims priority from Korean Patent Application No. 10-2006-0090890 filed on September 19, 2006 in the Korean Intellectual Property Office, the disclosure of which is incorporated herein by reference in its entirety.

BACKGROUND OF THE INVENTION

1. Field of the Invention

The present invention relates to an apparatus and method of tagging (or storing) a photo with an identification (ID) based on a relative physical position, and more particularly, to an apparatus and method of tagging a photo with an ID based on a relative physical position in which ID information of a person or object included in an image taken by a camera is extracted and stored together with the image, thereby enabling fast and convenient retrieval of the image using the ID.

2. Description of the Related Art

Recently, effective retrieval of photos stored in a digital camera has become increasingly important.
As more users want to record memorable moments or events such as graduation ceremonies, and birthday parties, a large number of photos are being taken more frequently.
Also, most of the people we meet in our everyday lives have mobile phones, the majority of which are those with a camera (camera phones).
Meanwhile, due to the popularity of personal homepages, such as blogs, Cyworld, myspace, or the like, more people have been taking a large number of photos using a camera phone and sharing the photos on the web.
Accordingly, an individual person may have hundreds to thousands of photos. In order to find a desired photo among these photos, all image files should be browsed one by one, or when photos are stored the user should record meta data such as location, and names of people corresponding to each photo and store the photo so that the photos can be recognized later.
In order to overcome such inconvenience, an automatic retrieval method has been suggested in which a photo is processed using an image processing technique, and the faces of persons included in the image are recognized such that a desired person can be automatically retrieved. However, the method cannot provide a reliable face retrieval result. Also, according to Korean Patent Application Laid-Open No. 2005-064823, entitled "Mobile Communication Terminal Having an Automatic Photographing function and Method of Controlling the Terminal", a photographed image is only transmitted to a telephone number specified in advance, but cannot solve the above problem because it does not contain meta information of photos.

SUMMARY OF THE INVENTION

Additional aspects and/or advantages of the invention will be set forth in part in the description which follows and, in part, will be apparent from the description, or may be learned by practice of the invention.
The present invention provides an apparatus and method to tag (create) a photo with an ID based on a relative physical position in which ID information of a person or object included in an image taken by a camera is automatically extracted when the image is taken, and stored as metadata together with the image so that a user can quickly and conveniently retrieve the image using the ID.
The above stated objectives as well as other objectives, features and advantages, of the present invention will become clear to those skilled in the art upon review of the following description, the attached drawings and appended claims.
According to an aspect of the present invention, there is provided an apparatus to tag (store) a photo with an identification (ID) based on a relative physical position of the apparatus, the apparatus including a pose calculation module to calculate a pose of a camera in the space, a photographing angle calculation module to calculate an angle at which each of the subjects is photographed, by using the calculated pose information and camera information, a coordinates calculation module to obtain the calculated photographing angle and the predetermined ID information of the subjects and calculating the relative distance and coordinates between the subjects, a valid subject selection module to identify the subjects located within the photographing angle by using the calculated relative distance and coordinates, and an image tagging module to tag the photographed image ID information to the identified subjects.
According to another aspect of the present invention, there is provided a method of tagging a photo with an ID based on a relative physical position, the method including calculating the pose of camera in the space; calculating an angle at which the subject is photographed, by using the calculated pose information and the camera information; obtaining the calculated photographing angle and the predetermined ID information of the subjects and calculating the relative distance and coordinates between subjects; identifying subjects located within the photographing angle by using the calculated distance and coordinates; and tagging ID information of the identified subjects, in the photographed image.

According to an aspect of the presentation, there is provided a method of creating a photo with an ID based on a relative physical position, the method comprising: calculating the pose of a camera photographing a subject; calculating an angle at which the subject is photographed, by using the calculated pose information and camera information; obtaining the calculated photographing angle and a predetermined ID information of the subjects and calculating the relative distance and coordinates between subjects; identifying subjects located within the photographing angle by using the calculated distance and coordinates; creating ID information of the identified subjects; and storing the ID information with the photographed image.

According to another aspect of the present invention, there is provided a method of storing a photo with ID information, the method comprising: obtaining a predetermined ID information of subjects; and storing the obtained predetermined ID information of the objects with a photo of the subjects.

BRIEF DESCRIPTION OF THE DRAWINGS

These and/or other aspects and advantages of the invention will become apparent and more readily appreciated from the following description of the embodiments, taken in conjunction with the accompanying drawings of which:

FIG. 1 is a block diagram illustrating a structure of an apparatus to tag a photo with an ID based on relative physical position according to an embodiment of the present invention;
FIG. 2 is a diagram illustrating roll, pitch, and yaw angles according to an embodiment of the present invention;
FIG. 3 is a diagram illustrating a horizontal photographing angle and a vertical photographing angle used in a photographing angle calculation module according to an embodiment of the present invention;
FIGS. 4A and 4B are diagrams illustrating examples of measuring a distance in a coordinates calculation module according to an embodiment of the present invention;
FIG. 5 is a diagram illustrating a method of calculating coordinates from distances between mobile phones in a coordinates calculation module according to an embodiment of the present invention;
FIG. 6 is a diagram illustrating a method of filtering subjects that are not located within a photographing angle according an embodiment of the present invention;
FIG. 7 is a diagram illustrating a photo including photographed people's ID information according to an embodiment of the present invention; and
FIG. 8 is a flowchart illustrating a method of tagging a photo with an ID based on a relative physical position of the objects according to an embodiment of the present invention.

DETAILED DESCRIPTION OF THE PREFERRED EMBODIMENTS

Reference will now be made in detail to the embodiments of the present invention, examples of which are illustrated in the accompanying drawings, wherein like reference numerals refer to the like elements throughout. The embodiments are described below to explain the present invention by referring to the figures.

Advantages and features of the present invention and methods of accomplishing the same may be understood more readily by reference to the following detailed description of preferred embodiments and the accompanying drawings. The present invention may, however, be embodied in many different forms and should not be construed as being limited to the embodiments set forth herein. Rather, these embodiments are provided so that this disclosure will be thorough and complete and will fully convey the concept of the invention to those skilled in the art, and the present invention will only be defined by the appended claims. Like reference numerals refer to like elements throughout the specification.

The present invention will now be described more fully with reference to the accompanying drawings, in which an exemplary embodiment of the invention is shown.

It will be understood that each block of the illustrations, and/or combinations of blocks, can be implemented by computer program instructions. These computer program instructions may be provided to a processor of a general-purpose computer, special purpose computer, or other programmable data processing apparatus to produce a machine, such that the instructions, which execute via the processor of the computer or other programmable data processing apparatus, create means to implement the functions/acts specified in the block or blocks.

These computer program instructions may also be stored in a computer-readable memory or storage that can direct a computer or other programmable data processing apparatus to function in a particular manner, such that the instructions stored in the computer-readable memory or storage produce an article of manufacture including instruction means which implement the function/act specified in the block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps to implement the functions/acts specified in the block or blocks.

In addition, each block may represent a module, a segment, or a portion of code, which may comprise one or more executable instructions to implement the specified logical functions. It should also be noted that in other implementations, the functions noted in the blocks may occur out of the order noted or in different configurations of hardware and software. For example, two blocks shown in succession may, in fact, be executed substantially concurrently, or the blocks may sometimes be executed in the reverse order, depending on the functionality involved.

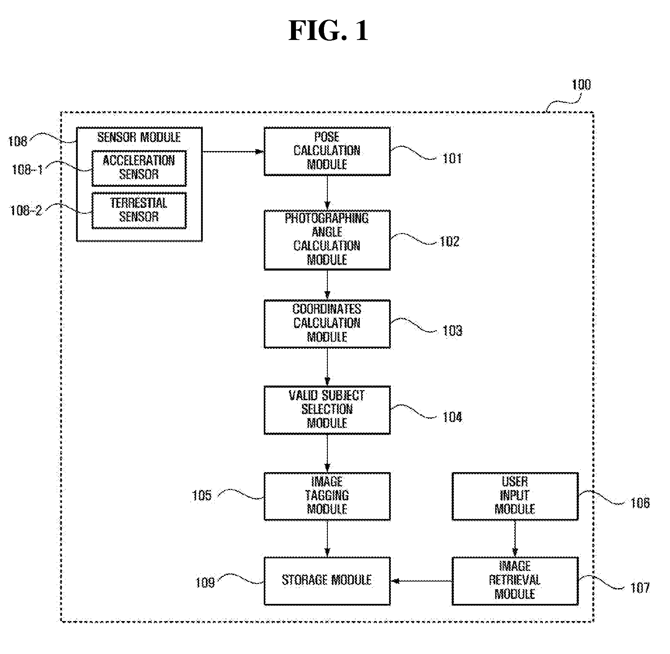

FIG. 1 is a block diagram illustrating a structure of an apparatus to tag a photo with an ID based on relative physical position according to an embodiment of the present invention.

The apparatus 100 to tag a photo with an ID based on a relative physical position includes a pose calculation module 101 to calculate the pose of a camera photographing a subject in space, a photographing angle calculation module 102 to calculate an angle at which the subject is photographed, by using the calculated pose information and the camera information, a coordinates calculation module 103 to obtain the calculated photographing angle and the predetermined ID information of the subjects and calculating the relative distance and coordinates between the subjects, a valid subject selection module 104 to identify the subjects located within the photographing angle by using the calculated relative distance and coordinates of the subjects, an image tagging module 105 to include the identified subjects to the photographed image ID information, a user input module 106 to input an input of ID information from a user for retrieval of an image, an image retrieval module 107 to store the input ID information of a subject and metadata and/or retrieve an image including the ID information, and a sensor module 108 to measure an acceleration occurring when a camera moves and to detect a magnetic line of force.

The term 'module', as used herein, means, but is not limited to, a software or hardware component, such as a Field Programmable Gate Array (FPGA) or Application Specific Integrated Circuit (ASIC), which performs certain tasks. A module may advantageously be configured to reside on the addressable storage medium and configured to execute on one or more processors. Thus, a module may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules may be combined into fewer components and modules or further separated into additional components and modules. In addition, the components and modules may be implemented such that they execute one or more computers in a communication system.

For reference, in the present invention, subjects can include many objects having ID information, but for convenience of explanation, persons will be explained as examples of subjects.

It is assumed that both a photographer and photographed persons have mobile phones, the mobile phone of the photographer includes acceleration and terrestrial magnetic sensors to sense a pose of the phone, the mobile phones of the photographer and the photographed persons can perform local area communication and a distance calculation protocol to calculate relative coordinates with respect to each other is loaded on each mobile phone.

The pose calculation module 101 calculates a pose of a camera photographing a subject.

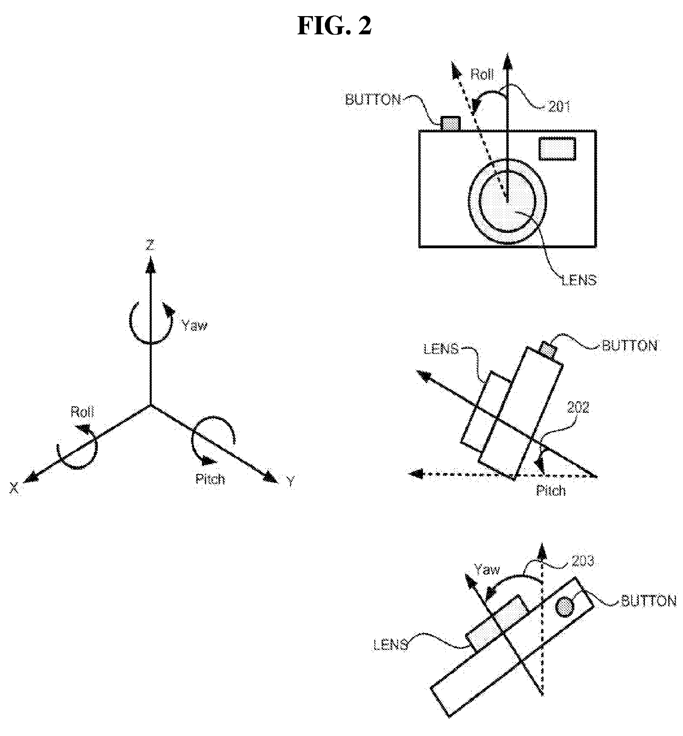

Here, the pose of the camera includes at least one roll, pitch and yaw angles of the camera, and FIG. 2 is a diagram briefly illustrating roll, pitch, and yaw angles of the camera.

The roll angle 201 of the camera is an angle generated by rotating the camera to the left or to the right with respect to the front face of the camera, the pitch angle 202 is an angle generated by rotation of the camera upward or downward with respect to the front face, and the yaw angle 203 is an angle generated by rotation of the camera to the east or to the west with respect to due north.

The pose of the camera in a 3-dimensional (3D) space described above can be recognized using an acceleration sensor 108-1 and a terrestrial magnetic sensor 108-2 included in the sensor module 108.

According to an aspect of the present invention, the acceleration sensor 108-1 can be a 3-axis acceleration sensor and a terrestrial magnetic sensor. The acceleration sensor 108-1 measures an acceleration value occurring when an object moves, and the terrestrial magnetic sensor 108-2 detects a magnetic line in the direction from the north of Earth to the south.

Through the sensor module 108, the pose calculation module 101 can calculate the roll angle 201 and the pitch angle 202 from an inertia signal, and can calculates the yaw angle 203 from a terrestrial magnetic signal.

Generally, in order to take a photo without shaking of a camera, the motion of the camera is as minimized as possible, and thus the acceleration by the motion is very small.

Accordingly, since it is highly probable that only acceleration by gravity exists in the acceleration detected by a sensor(108-2), detection of a pose using the acceleration sensor 108-1 has a high accuracy.

Assuming that 3 axes' acceleration values detected through a sensor are $A_x$, $A_y$, and $A_z$, a roll angle $\Phi$ and a

pitch angle θ can be calculated as the following equation 1:

$$\phi = \tan^{-1}\left(\frac{A_{by}}{A_{bz}}\right)$$

$$\theta = \tan^{-1}\left(\frac{A_{bx}}{\sqrt{A_{by}^2 + A_{bz}^2}}\right) \quad \cdots\cdots(1)$$

The photographing angle calculation module 102 calculates an angle at which a subject is photographed by using the pose information calculated in the pose calculation module 101 and camera information.

Here, the camera information includes the focal length of the camera, and the sensing area of an image sensor, and the angle at which the subject is photographed can be calculated using the pose of the camera in space and the focal length of the camera.

That is, the photographing angle calculation module 102 calculates the photographing angle of an external area that arrives at the image sensor of the current camera and is included in an image.

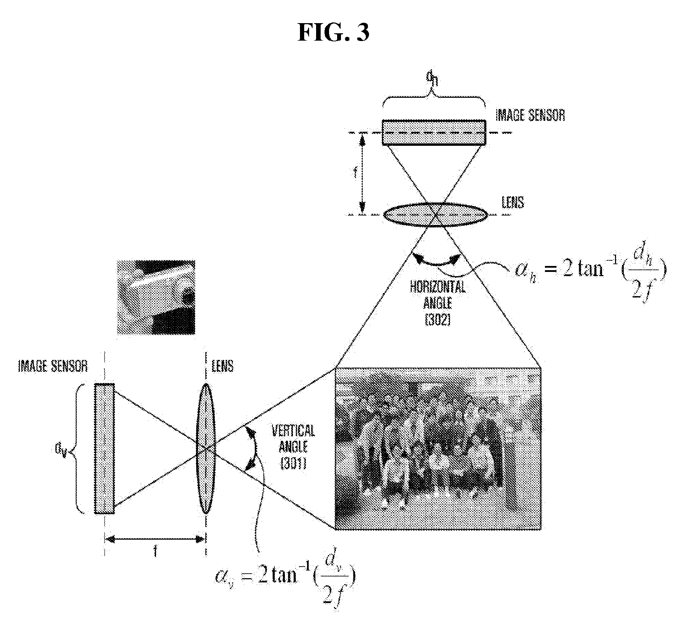

FIG. 3 is a diagram illustrating a horizontal photographing angle and a vertical photographing angle used in the photographing angle calculation module 102 according to an embodiment of the present invention.

The photographing angle is defined in two types, a vertical angle ($\alpha_v$) 301 and a horizontal angle ($\alpha_h$) 302. Both are determined with respect to the focal length f of a lens and the size ($d_v$, $d_h$) of an image sensor as the following equation (2):

$$\alpha_v = 2\tan^{-1}\left(\frac{d_v}{2f}\right)$$

$$\alpha_h = 2\tan^{-1}\left(\frac{d_h}{2f}\right) \quad \cdots\cdots(2)$$

The coordinates calculation module 103 obtains the photographing angle calculated in the photographing angle calculation module 102 and predetermined ID information of each of subjects, and calculates the relative distance and coordinates between the subjects.

Here, the predetermined ID information of the subjects includes one of a unique number used in radio frequency identification (RFID), Bluetooth, and ultra wideband (UWB), the phone number of a mobile terminal, and an IP address of a network terminal.

Meanwhile, a method of extracting coordinates is generally broken down into two different types of methods.

The first method is for a case where an external device providing position information exists. For example, ultrasound transmitters are disposed at predetermined intervals or at predetermined locations on an indoor ceiling, thereby obtaining the positions of the transmitters, or an RFID storing information on a position can be read, thereby obtaining the position.

In this case, the external device providing a position communicates the coordinates of each mobile device with the other mobile device, and thus can obtain the coordinates of all the mobile device on a plane.

The second method is for a case where an external device providing position information does not exist.

In this case, by calculating the distance between mobile devices and combining the results, the coordinates can be obtained.

The method of obtaining the distance between mobile devices includes a method of using attenuation with respect to the distance of an RF signal, a method of using the difference between the transfer speed of an RF signal and that of an ultrasound signal, and a method of using a cell ID of a mobile phone. In the present invention, for convenience of explanation, the leading methods, that is, the method of using attenuation with respect to the distance of an RF signal and the method of using the difference between the transfer speed of an RF signal and that of an ultrasound signal will be used.

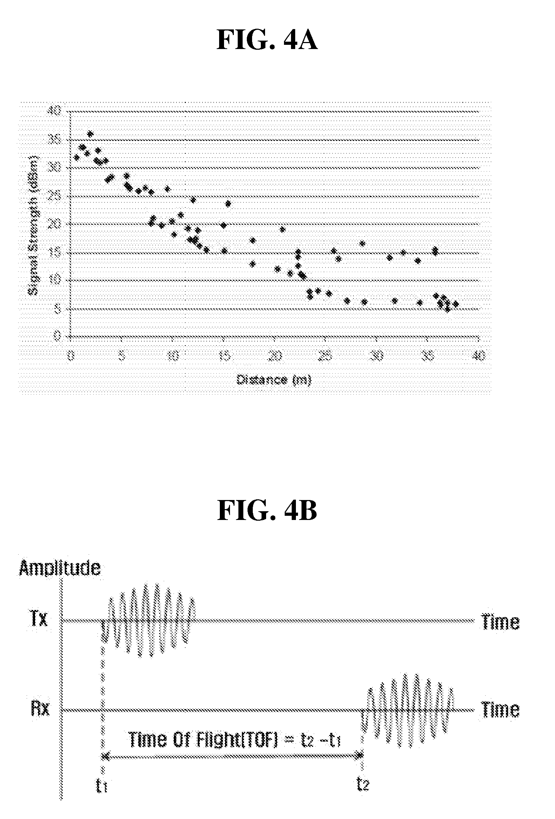

FIGS. 4A and 4B are diagrams illustrating examples of measuring a distance in the coordinates calculation module 103 according to an embodiment of the present invention.

First, in the method of using attenuation with respect to the distance of an RF signal illustrated in FIG. 4A, a table on the attenuation with respect to the distance according to the characteristics of an RF signal is stored, and the magnitude of a currently received RF signal is compared with the table, thereby obtaining the distance between the mobile devices.

The method of using the transfer speed difference between an RF signal and an ultrasound signal illustrated in FIG. 4B is based on that an RF signal has a transmission speed of 300,000 km per second and an ultrasound signal has a transmission speed of 0.33 km per second.

In this method, RF and ultrasound signals are transmitted at the same time, and the difference between a time when the RF is detected and a time when the ultrasound is detected is obtained, thereby estimating the distance.

After obtaining the distance between each mobile device in this way, the distances are combined, thereby calculating the coordinates of the mobile devices.

Meanwhile, the method of calculating coordinates based on the distance information is broadly broken down into a process of converting the distances between 3 mobile phones into coordinates, and a process of calculating the entire coordinates by combining the converted coordinates.

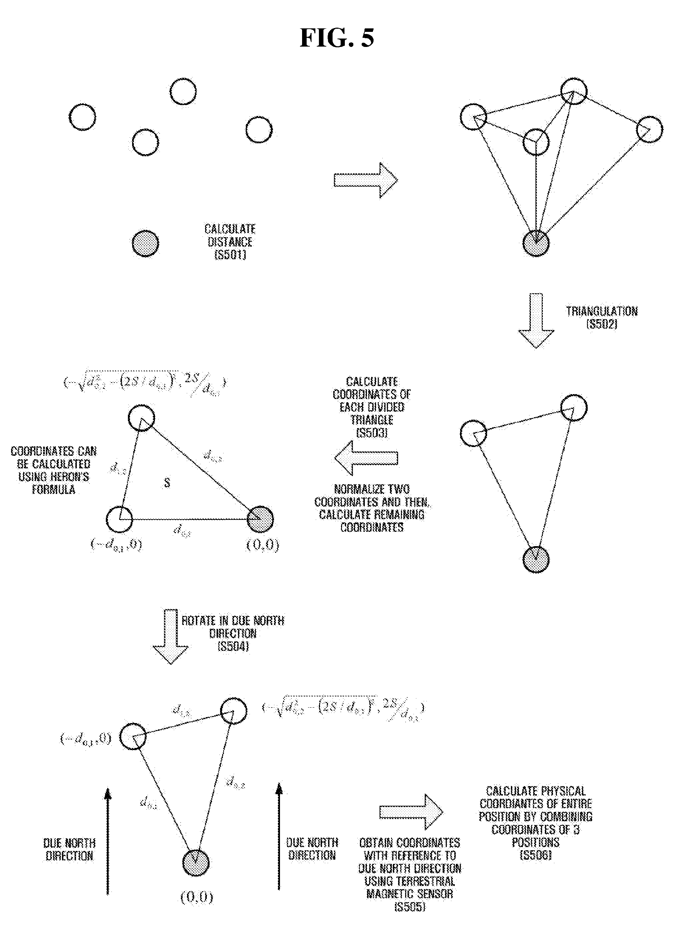

FIG. 5 is a diagram illustrating a method of calculating coordinates from distances between mobile phones in the coordinates calculation module 103 according to an embodiment of the present invention.

Since it is assumed in the description of the apparatus illustrated in FIG. 1 that both a photographer and photographed persons have mobile phones, the mobile phone of the photographer includes acceleration and terrestrial magnetic sensors to sense a pose, the mobile phones of the photographer and the photographed persons can perform local area communication A distance calculation protocol to calculate relative coordinates with respect to each other is loaded on each mobile phone, calculation of the distance between each mobile phone is possible in operation S501.

Then, the positions between each mobile phone are divided into triangles in operation S502. The coordinates of each divided triangle are calculated in operation S503.

In the calculation, first, the coordinates of two mobile phones are normalized in the horizontal direction, and based on the result of the calculation, the coordinates of the mobile phones are calculated.

If the coordinates of the two mobile phones are normalized, the coordinates of the reference mobile become (0,0), and the coordinates of the other mobile phone are based on the distance calculated in operation S501 (two coordinates among three coordinates are calculated).

By using Heron's formula enabling calculation of the area of a triangle when the lengths of three sides of the triangle are known, the area of the divided triangle can be calculated, and if the area of the triangle and the lengths of each side are known, the angles of the triangle can be known, and thus the remaining coordinates can be calculated.

The coordinates of all the mobile phones normalized and calculated in operation S503 are rotated in the due north direction measured through a terrestrial magnetic sensor in operation S504.

Then, physical coordinates with reference to due north can be obtained in operation S505 and by combining the coordinates of the 3 mobile phones, the entire coordinates of the mobile phones are calculated in operation S506.

In addition, in order to extract the physical position with respect to objects, the relative distances are extracted through local area communication between mobile phones and by combining the relative distances the coordinates can be calculated.

If a 4G communication environment is introduced in the future, local area communication between mobile phones will be enabled, and by using the characteristics of the communication signals, the distance can be calculated.

The valid subject selection module 104 identifies subjects located within a photographing angle, by using the distance and coordinates calculated in the coordinates calculation module 103.

An object may not be located within the photographing angle of the camera, but located around the camera and thus the camera may recognize predetermined ID information of the object. Also, an object may not be included in an image because the object is too far from the camera, but may be recognized to be included in the background of an image because it is located within the photographing angle.

In those cases, since the ID of the object is not required to be included in a photo, a process of filtering is required.

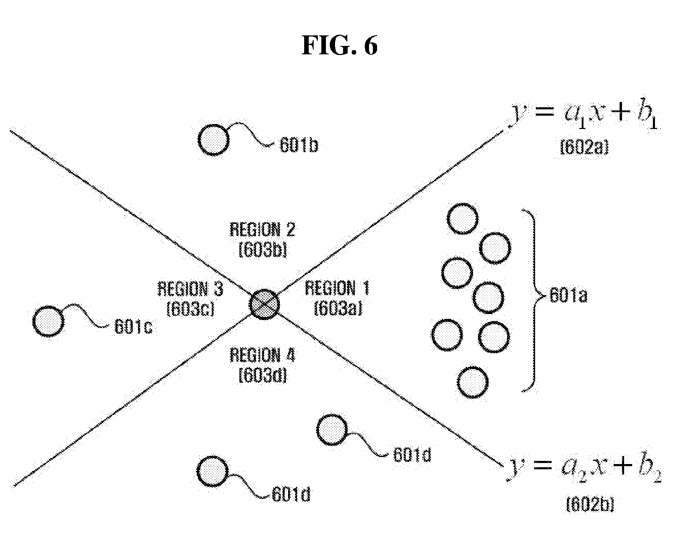

FIG. 6 is a diagram illustrating a method of filtering subjects that are not located within a photographing angle according to an embodiment of the present invention.

In order to distinguish a subject 601a located within the photographing angle of a camera from subjects 601b, 601c, and 601d that do not exist in the photographing angle of the camera but exist around the camera, thereby making their predetermined ID information recognized by the camera, 'the area of an inequality' can be used.

A set of entire points satisfying an inequality on a coordinates plane is referred as the area of the inequality. The area of an inequality $y>f(x)$ is the area above a curve $y=f(x)$ and the area of an inequality $y<f(x)$ is the area below the curve $y=f(x)$.

Here, an arbitrary point P that does not exist on the curve $y=f(x)$ is substituted and according to whether or not the inequality is satisfied, it can be determined on which side of the curve $y=f(x)$ the arbitrary point P exists.

By using this, and assuming that virtual lines forming the photographing angles of a camera illustrated in FIG. 6, are $y=a_1x+b_1$ 602A and $y=a_2x+b_2$ 602B (here $a_1>a_2$), and the areas generated by the two virtual lines 602a and 602b are a first region 603a, a second region 603b, a third region 603c, and a fourth region 603d, each region 603a through 603d satisfies the following expression 3:

the first region 603a:

$$y \leq a_1x+b_1$$

$$y \geq a_2x+b_2$$

the second region 603b:

$$y \geq a_1x+b_1$$

$$y \geq a_2x+b_2$$

the third region 603c:

$$y \geq a_1x+b_1$$

$$y \leq a_2x+b_2$$

the fourth region 603d:

$$y \leq a_1x+b_1$$

$$y \leq a_2x+b_2 \quad ......(3)$$

Accordingly, in order to filter an object that is not located within the photographing angle of the camera, the coordinates of subjects having predetermined ID information recognized by the camera are substituted in the condition of the first region 603a corresponding to the photographing angle of the camera.

As a result, it can be determined that a subject with coordinates satisfying the condition is located within the photographing angle of the camera and a subject with coordinates not satisfying the condition is not located within the photographing angle of the camera.

As another method, the mean and dispersion of coordinates of extracted objects are calculated and then, IDs, which are ID information, of objects in a distance greater than, for instance, 2 sigma from the mean may not be recorded, thereby filtering objects by considering the photographing angle and the distance at the same time.

The image tagging module 105 tags ID information of subjects identified in the valid subject selection module 104, to a photographed image.

In the image tagging module 105, extracted mobile phone IDs are recorded in the form of metadata in a standard photo format such as joint photographic experts group (JPEG) format.

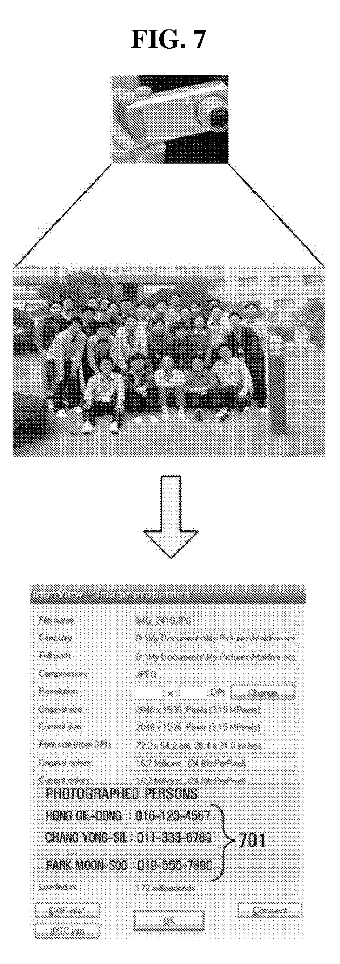

FIG. 7 is a diagram illustrating a photo including photographed persons' ID information according to an embodiment of the present invention.

Mobile IDs 701 of the photographed persons are included in the photo taken by a user, that is, included in the subject photographing angle, are included in the corresponding image by the image tagging module 105.

For reference, in the case of JPEG, an extension field referred to as EXIF exists, thereby supporting the user to record arbitrary information. Information on the photographed persons is stored in the extension field, and can be used for retrieval later.

Also, coordinates based on a global positioning system (GPS) as well as the IDs of the photographed persons are recorded in the photographed persons' ID information, and it can be displayed later on which part in an image a person or object with a predetermined ID is positioned, thereby increasing uses' convenience of retrieval using the information and viewing the image.

The user input module 106 receives an input of ID information from the user for image retrieval.

For example, when the user searches for a photo including a predetermined person, if ID information, such as a mobile phone number of the predetermined person is input to the user input module 106, the image retrieval module 107, which will be explained later, retrieves images including the ID information input to the user input module 106.

Also, through the user input module 106, ID information desired to be input by the user can be directly input as metadata in each image.

For example, if metadata is input so that photos taken in a honeymoon can have a theme of the honeymoon, the photos can be retrieved later according to the theme.

The image retrieval module 107 can retrieve image including the ID information of a subject input in the user input module 106, and store data mapped with ID information of a subject to a storage module 109.

The image retrieval module 107 and the user input module 106 are included in any one of the camera photographing a subject and an external device, so that the user can easily and quickly retrieve a desired image using ID information.

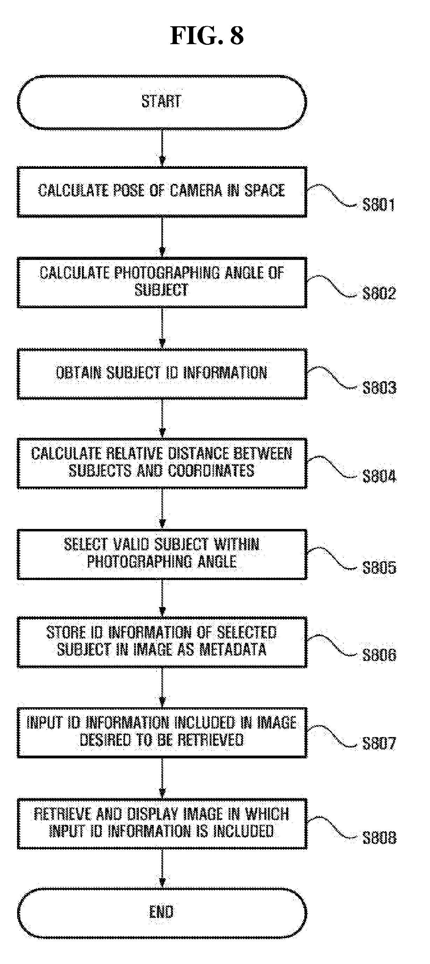

FIG. 8 is a flowchart illustrating a method of tagging a photo with an ID based on a relative physical position between subjects according to an embodiment of the present invention.

The pose of the camera is calculated using the sensor module 108 and the pose calculation module 101 in operation S801.

Then, by using the information on the pose of the camera and the camera information, the photographing angle calculation module 102 calculates an angle at which a subject is photographed in operation S802.

The coordinates calculation module 103 obtains predetermined ID information from the subject in operation S803, and calculates the relative distance and coordinates between subjects from the photographing angle calculated in operation S802 and predetermined ID information in operation S804.

Then, the valid subject selection module 104 identifies subjects that are located within the photographing angle by using the distance and coordinates calculated in operation S804 in operation S805.

The image tagging module 105 includes ID information of the identified subjects in the photographed image as metadata in operation S806.

Then, the user input module 106 receives an input of ID information from the user for image retrieval in operation S807, and the image retrieval module 107 retrieves an image including the input ID information.

The retrieved image is displayed to the user through a display apparatus in operation S808.

According to the apparatus and method to tag a photo with an ID based on a relative physical position has one or more of the following effects.

ID information of a person or object included in an image taken by a camera is automatically extracted, and stored as metadata together with the image, thereby allowing the user to quickly and conveniently retrieving the image. It is understood that the ID information can be stored at a different storage medium where the image is stored.

In concluding the detailed description, those skilled in the art will appreciate that many variations and modifications can be made to the preferred embodiments without substantially departing from the principles of the present invention. Therefore, the disclosed preferred embodiments of the invention are used in a generic and descriptive sense only and not for purposes of limitation.

Although a few embodiments of the present invention have been shown and described, it would be appreciated by those skilled in the art that changes may be made in these embodiments without departing from the principles and spirit of the invention, the scope of which is defined in the claims and their equivalents.


**Claims**

1. An apparatus to tag a photo with an identification (ID) based on a relative physical position, the apparatus comprising:

   a pose calculation module to calculate the pose of a camera photographing subjects;
   a photographing angle calculation module to calculate an angle at which each of the subjects is photographed, by using the calculated pose information and the camera information;
   a coordinates calculation module to obtain the calculated photographing angle of the subjects and/or a predetermined ID information of the subjects and to calculate the relative distance and coordinates between the subjects; and
   an image tagging module to tag the photographed image ID information to the identified subjects.

2. The apparatus of claim 1, further comprising a user input module to receive an input of the ID information from a user for retrieval of an image.

3. The apparatus of claim 2, further comprising an image retrieval module to store the input ID information of the subjects and metadata mapped with the ID information, and to retrieve the image based on the ID information.

4. The apparatus of claim 3, wherein the image retrieval module comprises at least any one of the cameras photographing a subject and an external device, and retrieves a desired image using the ID information.

5. The apparatus of claim 1, wherein the pose of a camera comprises at least one of roll, pitch, and yaw angles.

6. The apparatus of claim 1, wherein the pose calculation module calculates a roll angle and a pitch angle from an inertial signal, and calculates a yaw angle using a terrestrial magnetic signal.

7. The apparatus of claim 1, wherein the camera information comprises the focal length of the camera and the sensing area of an image sensor.

8. The apparatus of claim 1, wherein the predetermined ID information of the subjects comprises any one of a unique number used in radio frequency identification (RFID), Bluetooth, and ultra wideband (UWB), the phone number of a mobile terminal, and an IP address of a network terminal.

9. The apparatus of claim 1, further comprising:

   a valid subject selection module to identify the subjects located within the photographing angle by using the calculated relative distance and coordinates.

10. The apparatus of claim 1, further comprising:

   a sensor module to sense an acceleration of the objects and to detect a magnetic line in the direction from the north of Earth to the south of the Earth.

11. The apparatus of claim 10, wherein the sensor comprises an acceleration sensor and a terrestrial magnetic sensor.

12. A method of tagging a photo with an ID based on a relative physical position, the method comprising:

   calculating the pose of a camera photographing a subject;
   calculating an angle at which the subject is photographed, by using the calculated pose information and camera information;

obtaining the calculated photographing angle and a predetermined ID information of the subjects and calculating the relative distance and coordinates between subjects;

identifying subjects located within the photographing angle by using the calculated distance and coordinates; and

tagging ID information of the identified subjects, in the photographed image.

13. The method of claim 12, further comprising receiving an input of the ID information from a user for retrieval of an image.

14. The method of claim 13, further comprising storing the input ID information of the subjects and metadata mapped with the ID information, and retrieving an image including the ID information.

15. The method of claim 14, wherein the retrieving of the image is performed in at least one of a camera photographing a subject and an external device, and a desired image is retrieved through the ID information.

16. The method of claim 12, wherein the pose of a camera in space comprises at least one of roll, pitch, and yaw angles.

17. The method of claim 12, wherein the calculating of the pose comprises calculating a roll angle and a pitch angle from an inertial signal, and calculating a yaw angle through a terrestrial magnetic signal.

18. The method of claim 12, wherein the camera information comprises the focal length of the camera and the sensing area of an image sensor.

19. The method of claim 12, wherein the predetermined ID information of the subject comprises one of a unique number used in radio frequency identification (RFID), Bluetooth, and ultra wideband (UWB), the phone number of a mobile terminal, and an IP address of a network terminal.

20. The method of claim 12, further comprises filtering a subject which is not located in a photographing angle.

21. A method of storing a photo with an ID based on a relative physical position, the method comprising:

calculating the pose of a camera photographing a subject;

calculating an angle at which the subject is photographed, by using the calculated pose information and camera information;

obtaining the calculated photographing angle and a predetermined ID information of the subjects and calculating the relative distance and coordinates between subjects;

creating ID information using the calculated information; and

storing the ID information with the photographed image.

22. The method of claim 21, the method further comprising:

identifying subjects located within the photographing angle by using the calculated distance and coordinates.

23. The method of claim 21, the method further comprising:

retrieving the photographed image using the ID information.

24. The method of claim 21, the method further comprising:

reproducing the photographed image with the ID information.

25. A method of storing a photo with ID information, the method comprising:

obtaining a predetermined ID information of subject; and

storing the obtained predetermined ID information of the objects with a photo of the subject.

# FIG. 1

# FIG. 2

## FIG. 3

$$\alpha_h = 2\tan^{-1}\left(\frac{d_h}{2f}\right)$$

HORIZONTAL ANGLE (302)

IMAGE SENSOR

LENS

IMAGE SENSOR

LENS

VERTICAL ANGLE (301)

$$\alpha_v = 2\tan^{-1}\left(\frac{d_v}{2f}\right)$$

# FIG. 4A

# FIG. 4B

# FIG. 5

CALCULATE
DISTANCE
(S501)

TRIANGULATION
(S502)

CALCULATE
COORDINATES OF
EACH DIVIDED
TRIANGLE
(S503)

$(-\sqrt{d_{0,3}^2 - (2S/d_{0,3})^2}, 2S/d_{0,3})$

COORDINATES CAN
BE CALCULATED
USING HERON'S
FORMULA

$d_{0,2}$

S

$d_{0,3}$

$(-d_{0,1},0)$

$d_{0,3}$

$(0,0)$

NORMALIZE TWO
COORDINATES AND THEN,
CALCULATE REMAINING
COORDINATES

ROTATE IN DUE NORTH
DIRECTION
(S504)

$d_{0,1}$

$(-d_{0,1},0)$

$(-\sqrt{d_{0,2}^2 - (2S/d_{0,2})^2}, 2S/d_{0,2})$

$d_{0,3}$

$d_{0,2}$

DUE NORTH
DIRECTION

$(0,0)$

DUE NORTH
DIRECTION

OBTAIN COORDINATES
WITH REFERENCE TO
DUE NORTH DIRECTION
USING TERRESTRIAL
MAGNETIC SENSOR
(S505)

CALCULATE PHYSICAL
COORDIANTES OF ENTIRE
POSITION BY COMBINING
COORDINATES OF 3
POSITIONS
(S506)

# FIG. 6

$$y = a_1 x + b_1$$
(602a)

601b

REGION 2
(603b)

REGION 3
(603c)

REGION 1
(603a)

601a

601c

REGION 4
(603d)

601d

601d

$$y = a_2 x + b_2$$
(602b)

# FIG. 7

# FIG. 8

START

CALCULATE POSE OF CAMERA IN SPACE — S801

CALCULATE PHOTOGRAPHING ANGLE OF SUBJECT — S802

OBTAIN SUBJECT ID INFORMATION — S803

CALCULATE RELATIVE DISTANCE BETWEEN SUBJECTS AND COORDINATES — S804

SELECT VALID SUBJECT WITHIN PHOTOGRAPHING ANGLE — S805

STORE ID INFORMATION OF SELECTED SUBJECT IN IMAGE AS METADATA — S806

INPUT ID INFORMATION INCLUDED IN IMAGE DESIRED TO BE RETRIEVED — S807

RETRIEVE AND DISPLAY IMAGE IN WHICH INPUT ID INFORMATION IS INCLUDED — S808

END

**European Patent Office**

**EUROPEAN SEARCH REPORT**

Application Number

EP 07 11 6693

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 987 136 A (SCHIPPER JOHN F [US] ET AL) 16 November 1999 (1999-11-16) * abstract * * figures 1,2,4,7 * * claim 1 * | 1-25 | INV. H04N1/21 |
| A | US 2006/038896 A1 (TSUDA YU [JP] ET AL) 23 February 2006 (2006-02-23) * abstract * * paragraph [0002] * * claims 1,7 * | 1-25 | |
| A | US 2004/165063 A1 (IIDA TAKAYUKI [JP] ET AL) 26 August 2004 (2004-08-26) * abstract * * figures 1,13 * * paragraph [0008] * | 1-25 | |
| A | US 2003/058343 A1 (KATAYAMA TAKESHI [JP]) 27 March 2003 (2003-03-27) * abstract * * paragraphs [0003], [0012] * | 1-25 | TECHNICAL FIELDS SEARCHED (IPC) H04N |

The present search report has been drawn up for all claims

| Place of search | Date of completion of the search | Examiner |
|---|---|---|
| The Hague | 21 January 2008 | Stoffers, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 07 11 6693

This annex lists the patent family members relating to the patent documents cited in the above-mentioned European search report.
The members are as contained in the European Patent Office EDP file on
The European Patent Office is in no way liable for these particulars which are merely given for the purpose of information.

21-01-2008

| Patent document cited in search report | | Publication date | Patent family member(s) | | Publication date |
|---|---|---|---|---|---|
| US 5987136 | A | 16-11-1999 | NONE | | |
| US 2006038896 | A1 | 23-02-2006 | JP | 2006059009 A | 02-03-2006 |
| US 2004165063 | A1 | 26-08-2004 | JP | 2004260304 A | 16-09-2004 |
| US 2003058343 | A1 | 27-03-2003 | JP | 2003110789 A | 11-04-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020060090890
- KR 2005064823